# EUROPÄISCHE PATENTANMELDUNG

(11) **EP 0 712 920 A2**
(43) Veröffentlichungstag der Anmeldung: **22.05.1996**
(21) Anmeldenummer: 95116603.2
(22) Anmeldetag: 20.10.1995
(51) Int. Cl.: C10B 53/00, C10B 1/02

(54) **Vorrichtung für eine thermische Zersetzung eines Kunststoffes**

(30) Priorität: 15.11.1994 JP 306800/94
(71) Anmelder: TOSHIBA PLANT KENSETSU CO., LTD., Tokyo 105 (JP)
(72) Erfinder: Kamiyama, Takashi, Minato-ku, Tokyo 105 (JP)
(74) Vertreter: Vogeser, Werner, Dipl.-Ing.

(57) **Zusammenfassung**

Der Erfindung liegt die **Aufgabe** zugrunde, eine Vorrichtung für eine thermische Zersetzung eines Kunststoffes anzugeben, welche zur thermischen Zersetzung eines Kunststoffes, wie Abfallkunststoffes oder dergleichen, sowie zur Zurückgewinnung eines Ölgehaltes mit einem gewünschten Siedepunkt verwendet wird.

Die Aufgabe wird erfindungsgemäß dadurch gelöst, daß eine Vorrichtung für eine thermische Zersetzung eines Kunststoffes ein mit einem Heizmittel (8) versehenes Becken (1) für die thermische Zersetzung, eine Abführleitung (2), deren Öffnung in einem oberen, mittleren Bereich innerhalb des Bekkens (1) für die thermische Zersetzung liegt und nach außen hin aufsteigt, sowie ein Kühlungs-Kondensationsmittel (3) aufweist, welches in einem aufsteigenden Teil der Abführleitung (2) außerhalb des Beckens (1) für die thermische Zersetzung angeordnet wird und einen einen hohen Siedepunkt aufweisenden Bestandteil eines durch die Zersetzung erzeugten Gases kondensiert.

Erfindungsgemäß kann man die Wirkung erhalten, daß das Einbringen des Kunststoffes in das Becken (1) für die thermische Zersetzung sowie die Reinigung innerhalb des Beckens auf einfache Weise durchgeführt und zugleich der Kunststoff innerhalb des Beckens (1) für die thermische Zersetzung mit einem hohen Wirkungsgrad und auf gleichmäßige Weise erhitzt werden können.

## Beschreibung

Die Erfindung betrifft eine Vorrichtung für eine thermische Zersetzung, welche Kunststoff, wie Abfallkunststoff oder dergleichen, thermisch zersetzt und einen Ölgehalt zurückgewinnt.

Herkömmlicherweise werden Vorrichtungen verschiedener Art zur thermischen Zersetzung eines Kunststoffes und zum Zurückgewinnen eines Ölgehaltes vorgeschlagen. Als typische Beispiele hierzu sind eine Vorrichtung, welche die Erzeugung eines Gases durch eine thermische Zersetzung mittels Katalysator regelt, sowie eine Vorrichtung, bei welcher in einem Becken für eine thermische Zersetzung ein Kühlungs-Kondensationsmittel angeordnet wird, bekannt. Hierbei ist das Katalysatorsystem bei der erstgenannten Vorrichtung wegen seiner nachteiligen Katalysatorkosten und einer kurzen Lebensdauer nicht so vorteilhaft wie die letztgenannte Vorrichtung.

Die letztgenannte Vorrichtung, welche das Kühlungs-Kondensationsmittel aufweist, ist beispielsweise aus der JP-Patentschrift SHO 52-1391 bekannt. Bei dieser Vorrichtung werden in einem oberen Bereich eines Beckens für eine thermische Zersetzung eine Austrittsöffnung für ein durch die Zersetzung erzeugtes Gas sowie in einem unteren Bereich des Zersetzungsbeckens ein Bereich für die thermische Zersetzung vorgesehen. Ferner wird oberhalb der Innenseite des Zersetzungsbeckens ein Kühlungs-Kondensationsmittel angeordnet. Eingebrachter Kunststoff wird in dem Bereich für die thermische Zersetzung in dem unteren Bereich des Beckens für die thermische Zersetzung thermisch zersetzt. Im Verlauf der Zersetzung, wenn Gas erzeugt wird und aufsteigt, aus der Austrittsöffnung für das durch die Zersetzung erzeugte Gas nach außen abgeführt wird, wird ein einen hohen Siedepunkt aufweisender Bestandteil des durch die Zersetzung erzeugten Gases mittels des Kühlungs-Kondensationsmittels durch Kondensation verflüssigt. Die kondensierte Flüssigkeit wird über eine abfallende Leitung in den Bereich für die thermische Zersetzung zurückgeleitet, welche in einem Umfangsbereich der Innenseite des Beckens für die thermische Zersetzung angeordnet ist. Unkondensiertes Gas, welches aus dem Kühlungs-Kondensationsmittel ausströmt, wird ferner durch ein weiteres Kühlungsmittel durch Kühlung kondensiert, und ein Ölgehalt wird zurückgewonnen.

Bei der vorstehend beschriebenen Vorrichtung wird jedoch infolge der Anordnung des Kühlungs-Kondensationsmittels in dem Becken für die thermische Zersetzung als nachteilig angesehen, daß die Vorrichtung kompliziert ist. Auch das Einbringen des Kunststoffes in das Becken für die thermische Zersetzung sowie eine Reinigung der Innenseite sind nicht auf einfache Weise durchzuführen. Ferner hat man den Nachteil, daß die Mitte des Bereiches für die thermische Zersetzung nicht leicht zu erhitzen ist, während der Umfangsbereich des Bereiches für die thermische Zersetzung gut erhitzt wird, weil das Becken für die thermische Zersetzung üblicherweise von seiner Außenseite her erhitzt wird. Hierbei war deshalb ein besonderes Rührmittel erforderlich.

Der Erfindung liegt daher die **Aufgabe** zugrunde, eine Vorrichtung für eine thermische Zersetzung eines Kunststoffes anzugeben, mit welcher die vorstehend beschriebenen Nachteile beseitigt werden.

Die Aufgabe wird erfindungsgemäß dadurch gelöst, daß eine Vorrichtung für eine thermische Zersetzung eines Kunststoffes ein mit einem Heizmittel versehenes Becken für die thermische Zersetzung, eine Abführleitung, deren Öffnung in einem oberen, mittleren Bereich innerhalb des Beckens für die thermische Zersetzung liegt und nach außen hin aufsteigt, sowie ein Kühlungs-Kondensationsmittel aufweist, welches in einem aufsteigenden Teil der vorstehend beschriebenen Abführleitung außerhalb des Beckens für die thermische Zersetzung angeordnet wird und einen einen hohen Siedepunkt aufweisenden Bestandteil eines durch die Zersetzung erzeugten Gases kondensiert.

Gemäß einer vorteilhaften Weiterbildung wird die Aufgabe erfindungsgemäß dadurch gelöst, daß das Kühlungs-Kondensationsmittel ein Kühlungs-Kondensationsmittel vom Luftkühlungssystem ist, innerhalb dessen mehrstufige Umlenkplatten und zugleich außerhalb dessen eine Kühlrippe angeordnet werden.

Gemäß einer weiteren vorteilhaften Weiterbildung der Erfindung wird die Aufgabe dadurch gelöst, daß ein Temperaturdetektor zur Ermittlung einer Temperatur des durch die Zersetzung erzeugten Gases auf einer Ausströmungsseite des Kühlungs-Kondensationsmittels sowie ferner ein Temperaturregler angeordnet werden, in welchen ein Meßsignal des Temperaturdetektors eingegeben wird, und daß der Temperaturregler die Temperatur des vorstehend beschriebenen, durch die Zersetzung erzeugten Gases mit einem vorgegebenen Anstiegsfaktor erhöht und anschließend zur Aufrechterhaltung einer konstanten Temperatur das Heizmittel des Beckens für die thermische Zersetzung regelt.

Bei der erfindungsgemäßen Vorrichtung für die thermische Zersetzung des Kunststoffes können durch die Maßnahme, bei welcher das Kühlungs-Kondensationsmittel außerhalb des Beckens für die thermische Zersetzung angeordnet wird, eine einfachere Vorrichtung erhalten und zugleich das Einbringen des Kunststoffes in das Becken für die thermische Zersetzung sowie die Reinigung der Innenseite auf einfache Weise durchgeführt werden.

Ferner fließt die mittels des Kühlungs-Kondensationsmittels kondensierte Flüssigkeit des den hohen Siedepunkt aufweisenden Bestandteils des durch die Zersetzung erzeugten Gases aus der Abführleitung auf natürliche Weise nach unten in das Becken für die thermische Zersetzung hinein und strömt in eine Mitte hiervon zurück. Deshalb wird eine Wärmemenge, welche von der kondensierten Flüssigkeit gespeichert wurde, in die Mitte des Bereiches für die thermische Zersetzung eingeleitet und erhitzt zusammen mit einer Erwärmung aus dem Umfangsbereich den Kunststoff innerhalb des Beckens mit einem hohen Wirkungsgrad und zugleich auf gleichmäßige Weise.

Bei der erfindungsgemäßen Vorrichtung für die thermische Zersetzung des Kunststoffes kann man deshalb den thermischen Wirkungsgrad des Beckens für die thermische Zersetzung ohne Anordnung eines besonderen Rührmittels innerhalb des Beckens für die thermische Zersetzung erhöhen und zugleich einen Ölgehalt mit einem vorgegebenen Siedepunkt mit einem hohen Wirkungsgrad zurückgewinnen.

Nachfolgend wird die Erfindung anhand eines in der Zeichnung dargestellten Ausführungsbeispiels weiter beschrieben. Es zeigen:
- Fig. 1: eine schematische Darstellung eines Beispiels der erfindungsgemäßen Vorrichtung für die thermische Zersetzung des Kunststoffes; und
- Fig. 2: eine schematische Darstellung eines Beispiels von Kurven, welche einen Temperaturanstieg auf einer Ausströmungsseite des Kühlungs-Kondensationsmittels sowie eine Regelung eines konstanten Wertes wiedergeben.

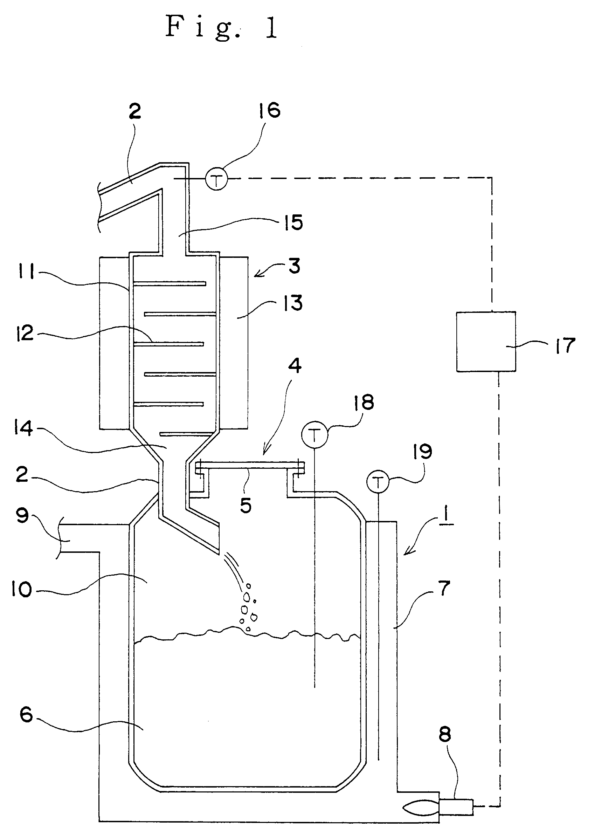

Fig. 1 zeigt schematisch ein Beispiel der erfindugnsgemäßen Vorrichtung für die thermische Zersetzung des Kunststoffes, welche ein Becken 1 für eine thermische Zersetzung, eine Abführleitung 2, welche von einem oberen Mittenbereich innerhalb des Beckens 1 für die thermische Zersetzung nach außen aufsteigt, sowie ein Kühlungs-Kondensationsmittel 3 aufweist. Dieses wird in einem aufsteigenden Teil der Abführleitung 2 außerhalb des Beckens 1 für die thermische Zersetzung angeordnet. Es verflüssigt einen Bestandteil eines durch die Zersetzung erzeugten Gases durch Kondensation, welcher einen hohen Siedepunkt aufweist.

Das Becken 1 für die thermische Zersetzung weist in seinem oberen Bereich einen Zuführteil 4 zum Einbringen des Kunststoffes mit einem auf-und zuschließbaren Deckel 5 sowie in seinem unteren Bereich einen Bereich für die thermische Zersetzung 6 auf, auf dessen Außenseite ein Heizofen 7 angeordnet wird. In einem unteren Bereich des Heizofens 7 ist ein Heizmittel 8, wie ein Brenner oder dergleichen, angeordnet. In einem oberen Bereich des Heizofens 7 ist eine Abgasleitung 9 angeordnet. In einem oberen Bereich des Beckens 1 für die thermische Zersetzung, das heißt, in einer Mitte eines Raums 10 oberhalb des Bereiches für die thermische Zersetzung 6, ist ein offenes Ende der vorstehend beschriebenen Abführleitung 2.

Das Kühlungs-Kondensationsmittel 3 weist eine vertikale Anordnung sowie ein Luftkühlungssystem auf. In einem Innenraum eines zylindrischen Gehäuses 11 sind mehrstufige Umlenkplatten 12 horizontal von beiden Innenseiten abwechselnd zueinander parallel angeordnet. Außerhalb des Gehäuses 11 ist eine Kühlrippe 13 angeordnet. Ferner sind ein Einströmungsteil 14 sowie ein Ausströmungsteil 15 hiervon jeweils an die vorstehend beschriebene Abführleitung 2 angeschlossen.

Man kann auch durch die Maßnahme, bei welcher der Einströmungsteil 14 sowie der Ausströmungsteil 15 beispielsweise durch eine Flanschverbindung jeweils an die Abführleitung 2 angeschlossen werden, und bei welcher das Kühlungs-Kondensationsmittel 3 aus der Abführleitung 2 herausgenommen werden kann, das Kühlungs-Kondensationsmittel 3 mit Eigenschaften auswählen und einbauen, die im Hinblick auf die Art des zu behandelnden Kunststoffes geeignet sind. Darüber hinaus kann man für das Kühlungs-Kondensationsmittel nicht nur das Luftkühlungssystem, sondern auch ein Wasserkühlungssystem verwenden, bei welchem eine Regelung in der Weise durchgeführt wird, daß keine übermäßige Kühlung erfolgt.

Die Abführleitung 2 auf einer Ausströmungsseite des Kühlungs-Kondensationsmittels 3 ist mit einem Temperaturdetektor 16 zur Ermittlung einer Temperatur eines durch die Zersetzung erzeugten Gases versehen, welches hierin strömt. Ein Ausgangssignal des vorstehend beschriebenen Temperaturdetektors 16 wird in einen Temperaturregler 17 eingegeben, welcher ein programmierbares Regelglied aufweist, welches die Temperatur des vorstehend beschriebenen, durch die Zersetzung erzeugten Gases mit einem vorgegebenen Anstiegsfaktor erhöht und anschließend zur Aufrechterhaltung einer konstanten Temperatur das Heizmittel 8 des Beckens für die thermische Zersetzung regelt.

Das heißt, je nach Art des Kunststoffes, welcher einer thermischen Zersetzungsbehandlung unterzogen wird, sind die Anstiegsfaktoren einer Temperatur, welche für eine Zurückgewinnung eines Ölgehaltes mit erwünschten Bestandteilen optimal ist, sowie die darauf folgenden Temperaturen zur Aufrechterhaltung eines konstanten Wertes unterschiedlich. Beispielsweise wird bei Polyäthylen bei einem Anstiegsfaktor der Temperatur von ca. 2 ^{o}C/min. sowie bei einer darauf folgenden Temperatur zur Aufrechterhaltung eines konstanten Wertes von ca. 250 ^{o}C ein Ölgehalt mit einem Fließpunkt von ca. 0 ^{o}C zurückgewonnen. Wenn der Anstiegsfaktor der Temperatur größer/gleich diesem Grenzwert ist, wird ein Ölgehalt mit einem höheren Fließpunkt zurückgewonnen, was bei einer Erhöhung der Temperatur zur Aufrechterhaltung des konstanten Wertes ebenfalls auftritt. Wenn die Temperatur zur Aufrechterhaltung des konstanten Wertes bei Polyäthylen beispielsweise auf ca. 300 ^{o}C gesetzt wird, wird ein Ölgehalt mit einem Fließpunkt von ca. 20 ^{o}C zurückgewonnen, welcher auch bei einer Raumtemperatur einen wachsartigen Zustand aufweist und deshalb nicht erwünscht ist.

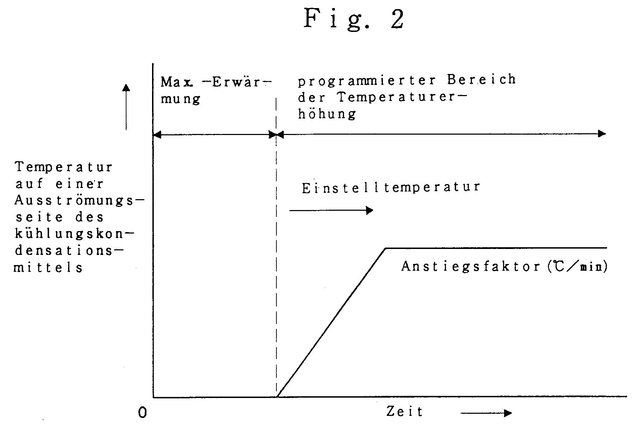

Fig. 2 zeigt schematisch ein Beispiel von Kurven, welche einen optimalen Temperaturanstieg sowie eine Regelung eines konstanten Wertes wiedergeben, die mittels des programmierbaren Regelgliedes des Temperaturreglers 17 geregelt werden. Unmittelbar nach einer Anlaufzeit entsteht infolge einer niedrigen Temperatur innerhalb des Beckens 1 für die thermische Zersetzung kein durch Zersetzung erzeugtes Gas. Wenn jedoch die Temperatur des Bereiches für die thermische Zersetzung 6 sich allmählich erhöht und ein durch Zersetzung erzeugtes Gas entsteht, strömt es in das Kühlungs-Kondensationsmittel 3 hinein und erhöht ferner die Temperatur der Abführleitung 2 auf seiner Ausströmungsseite. Die Temperatur wird durch das programmierbare Regelglied des Temperaturreglers 17 in der Weise geregelt, daß ein vorgegebener Anstiegsfaktor erreicht wird, und daß nach Erreichen einer im voraus durch das programmierbare Regelglied eingestellten, vorgegebenen Temperatur anschließend die Einstelltemperatur aufrechterhalten wird, wie in der Zeichnung dargestellt ist.

Als nächstes wird ein Verfahren zur Zurückgewinnung eines Ölgehaltes durch eine thermische Zersetzung eines Kunststoffes unter Verwendung der vorstehend beschriebenen Vorrichtung beschrieben.

Als erstes werden der Deckel 5 des Zuführteils 4 des Beckens 1 für die thermische Zersetzung geöffnet, eine vorgegebene Menge Kunststoff in das Becken 1 für die thermische Zersetzung eingebracht, der Deckel 5 geschlossen und mit einer Erwärmung mittels des Heizmittels 8 angefangen. Der Kunststoff in dem Becken 1 für die thermische Zersetzung wird zuerst nur von seinem Umfangsbereich her erhitzt, wodurch sich die Temperatur in seiner Nähe erhöht und dementsprechend ein durch Zersetzung erzeugtes Gas entsteht, welches aus dem Raum 10 oberhalb des Bereiches für die thermische Zersetzugn 6 über die Abführleitung 2 nach außen ausströmend aufsteigt, durch das Kühlungs-Kondensationsmittel 3 hindurch geht und von einem in der Zeichnung nicht dargestellten Kühlungsmittel als Ölgehalt zurückgewonnen wird.

Während des Durchgangs durch das Kühlungs-Kondensationsmittel 3 hindurch wird ein Betandteil mit einem hohen Siedepunkt durch Kondensation verflüssigt, aus dem Einströmungsteil 14 des Kühlungs-Kondensationsmittels 3 abgeführt, geht durch die Abführleitung 2 hindurch und strömt aus einem Ende hiervon in das Becken 1 für die thermische Zersetzung zurück. Weil das Ende der Abführleitung 2 in einer Mitte des Raums 10 in dem Becken 1 für die thermische Zersetzung geöffnet ist, fällt diese zurückströmende, kondensierte Flüssigkeit von der vorstehend beschriebenen Mitte nach unten in den Bereich für die thermische Zersetzung 6 hinein.

Wenn die Wirkung der thermischen Zersetzung fortschreitet, nimmt die Menge des durch die Zersetzung erzeugten Gases ebenfalls zu, und die Temperatur der Abführleitung 2 auf der Ausströmungsseite des Kühlungs-Kondensationsmittels 3 wird auch erhöht. Zu dieser Zeit läuft das programmierbare Regelglied des Reglers 17 und regelt das Heizmittel 8 in der Weise, daß die Temperatur der Abführleitung 2 auf der Ausströmungsseite des Kühlungs-Kondensationsmittels 3 einen vorgegebenen Anstiegsfaktor erreicht, wie in Fig. 2 gezeigt wird, und daß nachdem die Temperatur der Abführleitung 2 auf der vorstehend beschriebenen Ausströmungsseite eine konstant aufrechtzuerhaltende Einstelltemperatur erreicht hat, anschließend die Temperatur aufrechterhalten wird.

Während der Phase des vorstehend beschriebenen Temperaturanstiegs sowie der Aufrechterhaltungsperiode des konstanten Wertes der Temperatur wird durch Wärmeenergie der kondensierten Flüssigkeit, welche aus dem Einströmungsteil 14 des Kühlungs-Kondensationsmittels 3 über die Abführleitung 2 in das Becken 1 für die thermische Zersetzung zurückströmt, ein mittlerer Bereich des Bereiches für die thermische Zersetzung 6 erhitzt. Der Kunststoff in dem Bereich für die thermische Zersetzung 6 wird deshalb sowohl in seinem Umfangsbereich als auch in der Mitte erhitzt. Als Folge davon werden der gesamte Kunststoff auf gleichmäßige Weise und mit einem hohen Wirkungsgrad erhitzt und somit ein thermischer Wirkungsgrad des Beckens 1 für die thermische Zersetzung erhöht, und man kann zugleich einen Ölgehalt mit einem vorgegebenen Siedepunkt mit einem hohen Wirkungsgrad zurückgewinnen.

Wenn die thermische Zersetzung fortschreitet und die Menge des Kunststoffes in dem Becken 1 für die thermische Zersetzung geringer wird, werden die Erwärmung des Beckens 1 für die thermische Zersetzung angehalten, der Kunststoff wieder in das Becken 1 für die thermische Zersetzung eingebracht und der vorstehend beschriebene Vorgang wiederholt.

Bei dem vorstehend beschriebenen Beispiel wird der Kunststoff in dem Becken 1 für die thermische Zersetzung einer chargenweisen Verarbeitung unterzogen. Man kann jedoch durch Anordnung eines Regelmittels des Einbringens des Kunststoffes in den Zuführteil 4 des Beckens 1 für die thermische Zersetzung kontinuierlich oder intermittierend auch eine ununterbrochene Behandlung durchführen. In diesem Fall wird das Programm, bei welchem die Temperatur der Abführleitung 2 auf der Ausströmungsseite des Kühlungs-Kondensationsmittels 3 mit einem vorgegebenen Anstiegsfaktor geregelt wird, nur bei dem Anfangsanlauf durchgeführt. Das programmierbare Regelglied bei dem Regler 17 wird in der Weise eingestellt, daß danach die Regelung des konstanten Wertes der Temperatur durchgeführt wird.

Ferner ist es vorteilhafter, eine Kaskadenregelung oder dergleichen durch Kombinieren des vorstehend beschriebenen Temperaturdetektors 16, eines Temperaturdetektors für den Heizofen 19 sowie eines Temperaturdetektors innerhalb des Beckens für die thermische Zersetzung 18 miteinander durchzuführen, weil die Temperatur des vorstehend beschriebenen Temperaturdetektors 16 auf eine Betätigung des Brenners eine lange Ansprechzeit aufweist. Darüber hinaus kann auch wunschgemäß eine manuelle Temperaturregelung statt der Anordnung des Reglers 17 durchgeführt werden.

Bei der erfindungsgemäßen Vorrichtung für eine thermische Zersetzung eines Kunststoffes wird durch die Maßnahme, bei welcher das Kühlungs-Kondensationsmittel außerhalb des Beckens für die thermische Zersetzung angeordnet wird, eine einfachere Vorrichtung erhalten, und man kann zugleich das Einbringen des Kunststoffes in das Becken für die thermische Zersetzung sowie die Reinigung der Innenseite auf einfache Weise durchführen.

Ferner fließt die mittels des Kühlungs-Kondensationsmittels kondensierte Flüssigkeit des den hohen Siedepunkt aufweisenden Bestandteils des durch die Zersetzung erzeugten Gases aus der Abführleitung auf natürliche Weise nach unten in das Becken für die thermische Zersetzung hinein und strömt in dessen Mitte zurück. Deshalb wird eine Wärmemenge, welche von der kondensierten Flüssigkeit gespeichert wurde, in die Mitte des Bereiches für die thermische Zersetzung des Beckens für die thermische Zersetzung eingeleitet und erhitzt zusammen mit einer Erwärmung aus dem Umfangsbereich den Abfallkunststoff innerhalb des Beckens mit einem hohen Wirkungsgrad und zugleich auf gleichmäßige Weise.

Bei der erfindungsgemäßen Vorrichtung für die thermische Zersetzung des Kunststoffes kann man deshalb einen thermischen Wirkungsgrad des Beckens 1 für die thermische Zersetzung ohne Anordnung eines besonderen Rührmittels innerhalb des Beckens für die thermische Zersetzung erhöhen und zugleich einen Ölgehalt mit einem vorgegebenen Siedepunkt mit einem hohen Wirkungsgrad zurückgewinnen.

## Patentansprüche

1. Vorrichtung für eine thermische Zersetzung eines Kunststoffes,
dadurch **gekennzeichnet**,
daß ein mit einem Heizmittel (8) versehenes Becken (1) für die thermische Zersetzung, eine Abführleitung (2), deren Öffnung in einem oberen, mittleren Bereich innerhalb des Beckens (1) für die thermische Zersetzung liegt und nach außen hin aufsteigt, sowie ein Kühlungs-Kondensationsmittel (3) angeordnet werden, welches in einem aufsteigenden Teil der Abführleitung (2) außerhalb des Beckens (1) für die thermische Zersetzung angeordnet wird und einen einen hohen Siedepunkt aufweisenden Bestandteil eines durch die Zersetzung erzeugten Gases kondensiert.

2. Vorrichtung für eine thermische Zersetzung eines Kunststoffes nach Anspruch 1,
dadurch **gekennzeichnet**,
daß das Kühlungs-Kondensationsmittel (3) als Luftkühlungssystem ausgebildet ist, innerhalb welchem mehrstufige Umlenkplatten (12) und außerhalb welchem eine Kühlrippe (13) angeordnet werden.

3. Vorrichtung für eine thermische Zersetzung eines Kunststoffes nach Anspruch 1 oder 2,
dadurch **gekennzeichnet**,
daß ein Temperaturdetektor (16) zur Ermittlung einer Temperatur des durch die Zersetzung erzeugten Gases auf einer Ausströmungsseite des Kühlungs-Kondensationsmittels (3) sowie ferner ein Temperaturregler (17) angeordnet werden, in welchen ein Meßsignal des Temperaturdetektors (16) eingegeben wird, und daß der Temperaturregler (17) die Temperatur des durch die Zersetzung erzeugten Gases mit einem vorgegebenen Anstiegsfaktor erhöht und anschließend zur Aufrechterhaltung einer konstanten Temperatur das Heizmittel (8) des Beckens (1) für die thermische Zersetzung regelt.
